# EUROPÄISCHE PATENTSCHRIFT

(11) **EP 0 590 298 B1**
(45) Veröffentlichungstag und Bekanntmachung des Hinweises auf die Patenterteilung: **15.04.1998**
(21) Anmeldenummer: 93113446.4
(22) Anmeldetag: 24.08.1993
(51) Int. Cl.: H04K 1/00, H04J 13/00

(54) **Verfahren zum Synchronisieren eines Empfängers zum Empfang eines mit einem PN-Code gespreizten Datensignals**
Synchronisation procedure of a receiver for the reception of a data signal spread by a PN-code
Procédé pour la synchronisation d'un récepteur pour la réception d'un signal de données qui sont étalées avec un code pseudo aléatoire

(30) Priorität: 29.09.1992 CH 3040/92
(43) Veröffentlichungstag der Anmeldung: 06.04.1994
(73) Patentinhaber: ASCOM TECH AG, 3018 Bern 18 (CH)
(72) Erfinder: Bernhard, Urs, CH-8037 Zürich (CH); Welti, Arnold, CH-8965 Berikon (CH)
(74) Vertreter: Roshardt, Werner Alfred, Dipl.-Phys.

(56) Entgegenhaltungen:
- DE-A- 3 743 731
- DE-A- 3 743 732
- US-A- 4 203 071

## Beschreibung

### Technisches Gebiet

Die Erfindung bezieht sich auf ein Verfahren zum Synchronisieren eines Empfängerschaltkreises auf ein Empfangssignal, welches ein mit einem PN-Code gespreiztes Datensignal beinhaltet, bei welchem auf der Basis eines regelbaren Zeitgebers mindestens drei zeitlich gegeneinander versetzte PN-Code-Signale erzeugt werden, wobei ein mittleres PN-Code-Signal mit dem Empfangssignal zwecks Datendemodulation und ein voreilendes und nachlaufendes PN-Code-Signal zwecks Regelung des Zeitgebers mit dem Empfangssignal korreliert werden.

### Stand der Technik

Beim Einsatz eines Direct-Sequence-Verfahrens zur Uebertragung von Nachrichtensignalen mit Hilfe der Bandspreiztechnik wird ein bereits mit dem Nachrichtensignal modulierter Träger zusätzlich mit einem sogenannten PN-Code (PN = "Pseudo Noise") multipliziert. Da die Bandbreite des PN-Signals viel grösser als diejenige des Nachrichtensignals ist, erfolgt eine spektrale Spreizung des letzteren. Dies bedingt empfängerseitig einen beträchtlichen Aufwand zur Synchronisation des PN-Codes, um die spektrale Verbreiterung wieder rückgängig zu machen. Für die Datendemodulation muss nämlich der lokal im Empfänger erzeugte PN-Code (Empfänger-Code) genauer als 1 Code-Chip (Dauer T_{c}) mit dem PN-Code des empfangenen Signals (Sender-Code) übereinstimmen. In der Praxis wird die Empfängersynchronisation durch zwei hintereinandergeschaltete Verfahrensstufen, nämlich die Grobsynchronisation ("Acquisition") und die Feinsynchronisation ("Tracking") durchgeführt.

Aus der DE 37 43 732 ist beispielsweise ein derartiges Synchronisationsverfahren bekannt. Zur Grobsynchronisation müssen im Prinzip alle möglichen relativen Code-Verschiebungen ausgetestet werden, bis mittels einer Leistungsmessung die ungefähre zeitliche Uebereinstimmung der beiden Codes festgestellt werden kann. Zur Beschleunigung der Grobsynchronisation wird dabei vorgeschlagen, das Code-Wort wiederholt in jeweils mehreren unterschiedlichen Phasenlagen zu erzeugen, so dass pro Zeiteinheit gleichzeitig mehrere Phasenlagen überprüft werden können. Der Suchvorgang wird beendet, wenn in mindestens einer der unterschiedlichen Phasenlagen eine Korrelation zwischen dem Code-Wort und dem empfangenen Signal festgestellt wird. Die nachfolgende Feinsynchronisation wird mit einem Regelkreis (z. B. einem Delay-Locked-Loop, DLL) durchgeführt.

Solche nichtlinearen Regelkreise haben die Eigenschaft, dass sie unter Störeinflüssen den Synchronismus verlieren können (Ausrastphänomen). Eine Möglichkeit, dieses Ausrasten zu verhindern oder die Zeit bis zum Ausrasten zu vergrössern, besteht in der Verbreiterung der üblicherweise aus zwei Korrelationssignalen gebildeten Diskriminatorcharakteristik (Regelkennlinie, auch S-Kurve genannt) mit Hilfe von zusätzlichen Korrelatoren. So ist z. B. aus der DE 37 43 731 ein Feinsynchronisationsverfahren mit verbreiterter Diskriminatorkennlinie bekannt. Zu diesem Zwecke werden viele phasenverschobene Code-Signale erzeugt, die alle mit dem eintreffenden Datensignal korreliert werden. Aus den resultierenden Korrelationskurven wird durch geeignete Gewichtung eine Kennlinie mit vergrössertem linearen Bereich erzeugt. Wegen der zusätzlichen Korrelatoren nimmt in der Synchronisationsschaltung aber der Einfluss des Kanalrauschens zu, während die Nutzsignalbeiträge gleich bleiben. Zudem ist auch der Aufwand für eine Realisierung grösser.

### Darstellung der Erfindung

Aufgabe der Erfindung ist es, ein Verfahren der eingangs genannten Art anzugeben, das ein verbessertes Synchronisationsverhalten, insbesondere ein Nachführen in einem grossen Regelbereich erlaubt.

Gemäss der Erfindung besteht die Lösung darin, dass bei einer zeitlichen Drift des Datensignals nach vorwärts resp. nach rückwärts ein durch das voreilende und das nachlaufende PN-Code-Signal definierter Regelbereich adaptiv verschoben wird, indem das nachlaufende resp. das voreilende PN-Code-Signal um ein vorgegebenes Zeitintervall an vorderste resp. an hinterste Stelle verschoben wird und unter Neuzuordnung der PN-Code-Sequenzen das Datensignal zwecks Datendemodulation mit dem nunmehr zeitlich mittleren PN-Code-Signal korreliert wird.

Der Kern eines erfindungsgemässen PN-Code Tracking-Loops liegt darin, dass bei zunehmendem Synchronisationsfehler (Drift) einzelne Korrelationsarme umgeschaltet, d. h. auf eine andere Code-Position verschoben werden. Dadurch entsteht eine periodische und stückweise lineare Diskriminatorkennlinie. Der Vorteil gegenüber den klassischen Regelkreisen (z. B. DLL) besteht darin, dass ein schmalbandiger Regelkreis mit einem Loop-Filter niedriger Ordnung prinzipiell schnelle dynamische Vorgänge durch Umschalten einzelner Korrelationsarme nachregeln kann. Demgegenüber würde ein schmalbandiger klassischer Tracking-Loop mit dem gleichen Loop-Filter einem schnell ändernden Eingangssignal nicht nachfolgen können und ausrasten. Im Gegensatz zu den aus dem Stand der Technik bekannten Regelkreisen mit verbreiterter Diskriminatorkennlinie sind bei der Erfindung keine weiteren Korrelatoren notwendig. Ein wichtiger Aspekt besteh-t zudem darin, dass mit dem Umschalten des Codes in den Korrelationsarmen auch der Pfad für die Datendemodulation entsprechend neu gesetzt wird.

Gemäss einer bevorzugten Ausführungsform der Erfindung werden genau drei um je deltaT_{c} versetzte PN-Code-Signale erzeugt. Beim adaptiven Verschieben des Regelbereichs wird das frühere resp. spätere PN-Code-Signal um 3 deltaT_{c} an vorderste resp. hinterste Stelle verschoben. Mit nur drei Korrelatoren kann also ein im Prinzip beliebig breiter Regelbereich abgedeckt werden.

Der Faktor delta kann unterschiedlich gross gewählt werden. Besonders bevorzugte Werte sind delta = 0,5 und delta = 1.

Das Umschaltkriterium wird mit Vorteil so gewählt, dass immer eine Schalthysterese entsteht. Dadurch wird ein allzu häufiges Umschalten vermieden. Mit Vorteil wird auch darauf geachtet, dass die Leistung des Korrelationssignals im Datenpfad (d. h. in demjenigen Pfad, der für die Datendemodulation verwendet wird) einen gewissen Prozentwert (bezogen auf die maximal mögliche Korrelationsleistung) nicht unterschreitet.

Ein Verschieben des Regelbereichs kann mit Vorteil immer dann erfolgen, wenn die Leistung des Korrelationssignals im Korrelationspfad kleiner als in einem der Regelpfade ist. Es wird also stets das leistungsstärkste Korrelationssignal für die Datendemodulation ausgewertet.

Bei einer besonders bevorzugten Ausführungsform erfolgt ein Verschieben des Regelbereichs immer dann, wenn die Leistung des Korrelationssignals im Korrelationspfad kleiner als die Hälfte desjenigen eines Regelpfads ist. Dadurch kann auf einfache Weise die vorteilhafte Schalthysterese erzielt werden.

Eine erfindungsgemässe Synchronisationsschaltung umfasst einen regelbaren Zeitgeber (z. B. einen VCO = Voltage Controlled Oscillator), einen PN-Code-Generator mit mindestens drei Ausgängen zur Erzeugung von mindestens drei phasenmässig gegeneinander versetzten PN-Code-Signalen, zu jedem Ausgang des PN-Code-Generators einen Signalpfad mit einem Korrelator zum Korrelieren des gespreizten Datensignals mit je einem der PN-Code-Signale und eine Regelsignalschaltung zum Nachführen des Zeitgebers. Kennzeichnend für eine solche Synchronisationsschaltung ist eine Schaltmatrix, mit welcher wahlweise zwei adaptiv festlegbare Signalpfade an die Regelschaltung und einer an eine Datenmodulationsschaltung geleitet werden können. Der PN-Code-Generator ist so ausgebildet, dass die Phasenlage jedes an den Ausgängen abgegebenen PN-Code-Signals um vorgegebene Intervalle phasenmässig verschiebbar ist. Dies lässt sich z. B. mit steuerbaren resp. programmierbaren Verzögerungsgliedern realisieren.

Das erfindungsgemässe Verfahren eignet sich insbesondere zum Synchronisieren von Mobilfunkempfängern. Bei diesen verschiebt sich das Empfangssignal in Abhängigkeit von der Relativ-Geschwindigkeit gegenüber dem Sender.

Aus der Gesamtheit der Patentansprüche und der nachfolgenden Detailbeschreibung ergeben sich weitere bevorzugte Merkmalskombinationen der Erfindung.

### Kurze Beschreibung der Zeichnungen

Nachfolgend soll die Erfindung anhand von Ausführungsbeispielen und im Zusammenhang mit den Zeichnungen näher erläutert werden. Es zeigen:
- Fig. 1: Ein Blockschaltbild einer erfindungsgemässen Synchronisationsschaltung;
- Fig. 2a-e: eine Prinzipdarstellung der Korrelationskurven und Diskriminatorkennlinien beim erfindungsgemässen Verschieben des Regelbereichs;
- Fig. 3a-d: eine Darstellung der Korrelationskurven und Diskriminatorkennlinie für zwei verschiedene Umschaltkriterien;
- Fig. 4: ein Blockschaltbild für eine auf einem DLL basierenden Test- und Umschaltlogik;
- Fig. 5: ein Blockschaltbild für eine Test- und Umschaltlogik für eine auf dem Prinzip des MCTL basierenden Synchronisationsschaltung.

### Wege zur Ausführung der Erfindung

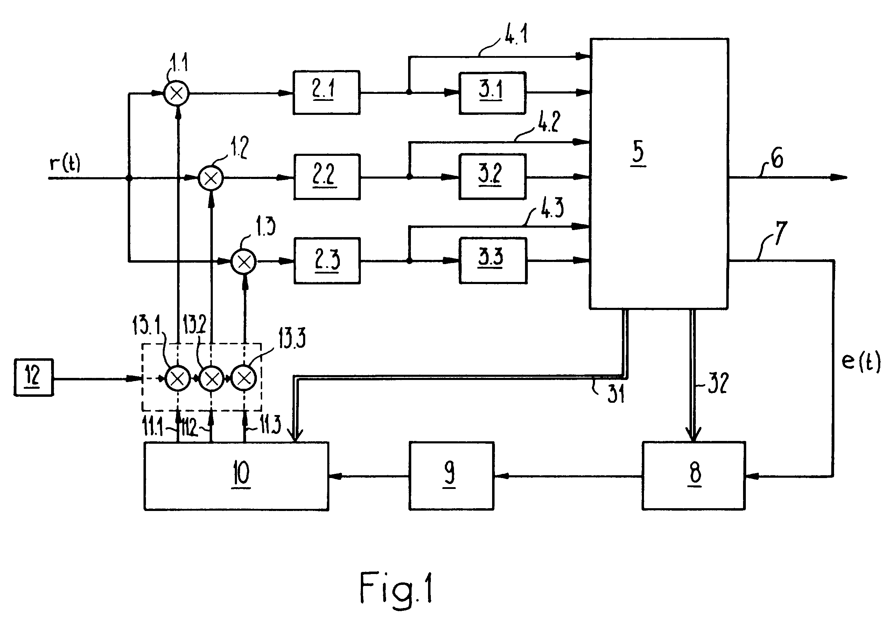

Wie aus Fig. 1 zu entnehmen ist, wird ein Empfangssignal r(t) auf drei schaltungsmässig im wesentlichen identische Korrelationspfade aufgeteilt. In einem Mischer 1.1 resp. 1.2 resp. 1.3 wird das Empfangssignal r(t) mit einem PN-Code-Signal definierter Phasenlage korreliert. In einem nachfolgenden Bandpassfilter 2.1 resp. 2.2 resp. 2.3 wird das Ausgangssignal des Mischers 1.1 resp. 1.2 resp. 1.3 in an sich bekannter Weise gefiltert und dann einerseits über eine Leitung 4.1 resp. 4.2 resp. 4.3 direkt einer Synchronisationssteuerung 5 und andererseits einem Enveloppendetektor 3.1 resp. 3.2 resp. 3.3 zugeführt. Die Enveloppendetektoren 3.1, 3.2, 3.3 bilden z. B. den Absolutbetrag des Eingangssignals oder das Amplitudenquadrat. Die mit den Enveloppendetektoren 3.1, 3.2, 3.3 erzeugten datenneutralen Korrelationssignale werden ebenfalls der Synchronisationssteuerung 5 zugeführt.

Die Synchronisationssteuerung 5 stellt das Herz der erfindungsgemässen Schaltanordnung dar. Sie gibt an einem Ausgang 6 ein (entspreiztes) Signal zur Datendemodulation ab, aus welchem mittels einer (nicht dargestellten) Demodulationsschaltung die übermittelten Daten extrahiert werden. An einem Ausgang 7 wird ein Fehlersignal e(t) ausgegeben, welches über ein Kreisfilter 8 einem VCO 9 zugeführt wird. Dieser VCO 9 stellt den Zeitgeber für einen PN-Code-Generator 10 dar, welcher gemäss der Erfindung an drei Ausgängen 11.1, 11.2, 11.3 bis auf die Phasenlage identische PN-Code-Signale erzeugen kann. Die Phasenlage eines jeden PN-Code-Signals ist innerhalb eines vorgegebenen Zeitrasters variierbar. Der Zeitraster ist durch eine Zeitdifferenz deltaT_{c} definiert.

Die Synchronisationssteuerung 5 gibt ferner dem Kreisfilter 8 die beim nachfolgend beschriebenen Umschalten wichtigen Anfangsbedingungen vor. Schliesslich gibt sie an den PN-Code-Generator 10 die Codepositionen resp. Phasenlagen für die PN-Signale weiter.

Andeutungsweise ist eine für eine allfällige heterodyne Rückspreizung erforderliche Ergänzung der Schaltung eingezeichnet. Es handelt sich dabei um einen Lokaloszillator 12 und je einen Multiplizierer/Mischer 13.1, 13.2, 13.3 für die an den Ausgängen 11.1, 11.2, 11.3 abgegebenen PN-Code-Signale.

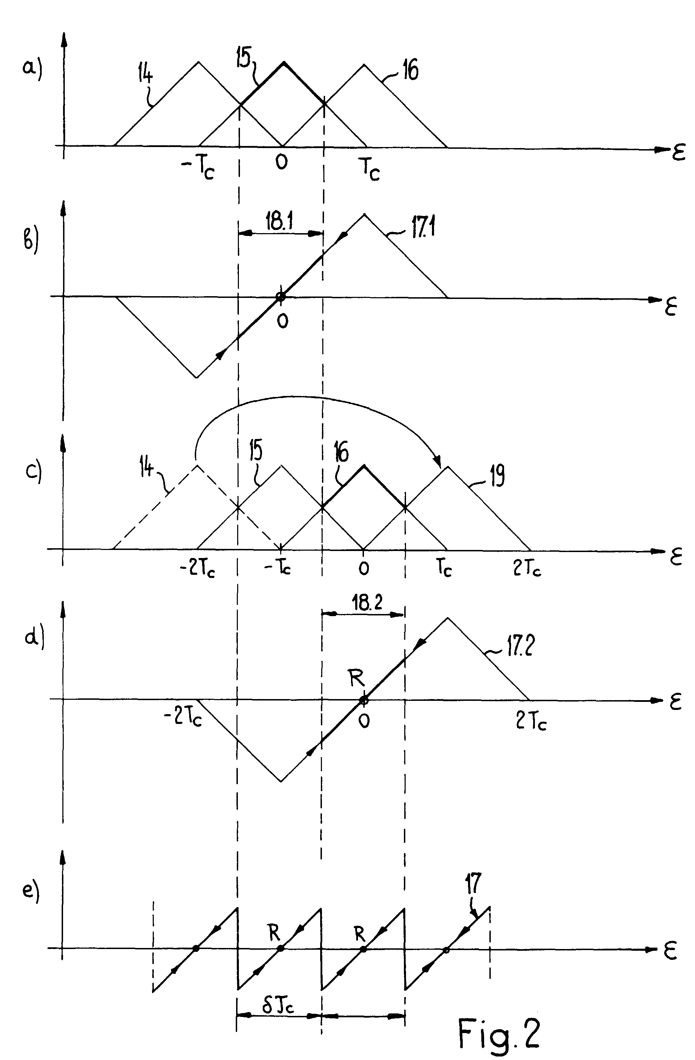

Die Funktionsweise der Synchronisationssteuerung 5 soll anhand der Fig. 2a-e erläutert werden. Es wird dabei davon ausgegangen, dass an den Ausgängen 11.1, 11.2, 11.3 drei um je deltaT_{c} zeitlich gegeneinander verschobene PN-Code-Signale abgegeben werden. Das (phasenmässig) mittlere PN-Code-Signal, welches z. B. am Ausgang 11.2 abgegeben und im Mischer 1.2 mit dem Empfangssignal r(t) korreliert wird, wird mittels des Synchronisationskreises insbesondere den steuerbaren Zeitgeber (VCO 9) möglichst gut dem Empfangssignal r(t) nachgeführt.

Für die folgenden Erläuterungen wird angenommen, dass am Ausgang 11.1 das um deltaT_{c} (in Fig. 2 wurde delta = 1 gewählt) zeitlich vorverschobene, d. h. frühere, und dass am Ausgang 11.3 das um deltaT_{c} nachlaufende, d. h. spätere PN-Code-Signal abgegeben wird. In den drei Korrelationspfaden werden damit drei Korrelationskurven 14 (entsprechend dem voreilenden Signal), 15 (entsprechend dem rechtzeitigen Signal) und 16 (entsprechend dem nachlaufenden Signal) in Abhängigkeit von der Phasenverschiebung des Empfangssignals r(t) gegenüber dem phasenmässig mittleren PN-Code-Signal erzeugt. Durch Subtraktion der voreilenden (early) von der nachlaufenden (late) Korrelationskurve wird eine Kennlinie 17.1 erhalten, die im Prinzip einen Regelbereich der Breite 2 (T_{c} + deltaT_{c}) erlaubt (ausserhalb dieses Bereiches verschwindet die Kennlinie 17.1). Das Fehlersignal zur Nachführung des VCO 9 hat eine Amplitude, die entsprechend dem Synchronisationsfehler epsilon aus der Kennlinie 17.1 folgt. Die Datendemodulation wird auf der Basis der mittleren Korrelationskurve 15 durchgeführt. Unter gewöhnlichen Umständen, d. h. wenn keine Drift der Phasenlage des Empfangssignals vorliegt, arbeitet die erfindungsgemässe Synchronisationsschaltung nach dem Prinzip eines konventionellen DLL. Verschiebt sich jedoch das Empfangssignal phasenmässig so stark, dass die Leistung gemäss Korrelationskurve 15 kleiner ist als in Korrelationskurve 14 oder 16, so wird die im folgenden beschriebene Umschaltung durchgeführt.

Angenommen die Phasenverschiebung zwischen Empfangssignal und dem zeitmittleren PN-Code-Signal wird (in positiver Richtung) immer grösser, dann wird ab einer bestimmten Phasendifferenz dephi (hierbei dephi > deltaT_{c}/2) das Korrelationssignal im phasenmässig mittleren Korrelationspfad (Korrelationskurve 15) kleiner als dasjenige im nachlaufenden Korrelationspfad (Korrelationskurve 16). Gemäss der Erfindung wird nun die Phase des ursprünglich voreilenden PN-Code-Signals (Korrelationskurve 14) derart geändert, dass sie dem ehemals nachlaufenden PN-Code-Signal (Korrelationskurve 16) um deltaT_{c} nacheilt (Korrelationskurve 19).

Gleichzeitig wird eine Neuzuordnung der Korrelationspfade in dem Sinne durchgeführt, dass die Datendemodulation auf der Basis der nunmehr (phasenmässig) mittleren Korrelationskurve 16 durchgeführt wird. Zur Erzeugung des Fehlersignals wird die Differenz zwischen der Korrelationskurve 19 und der ehemals mittleren Korrelationskurve 15 verwendet (vgl. Fig. 2d). Ein Vergleich der beiden Fig. 2b und d zeigt, dass anstelle der Kennlinie 17.1 die zeitlich verschobene Kennlinie 17.2 getreten ist. Die Regelung erfolgt nun auch auf einem anderen Nullpunkt (welcher ebenfalls um deltaT_{c} verschoben ist).

In völlig analoger Weise kann auch eine Drift in Rückwärtsrichtung ausgeglichen werden. Durch Aneinanderreihung der erfindungsgemässen Regelbereiche 18.1, 18.2 etc. ergibt sich die erfindungsgemässe, stückweise stetige, sägezahnförmige Kennlinie 17 gemäss Fig. 2e.

Da sich beim Umschalten eines der drei PN-Code-Signale und der Neuzuordnung der Korrelationspfade nicht nur der relative Synchronisationsfehler ändert (gemäss Fig. 2c von +deltaT_{c}/2 auf -deltaT_{c}/2), sondern auch der Wert des Fehlersignals, muss der Wert des Ausgangssignals des Kreisfilters 8 entsprechend dem Wert in der neuen Diskriminatorkennlinie initialisiert werden (durch Vorgabe der Anfangsbedingungen an das Kreisfilter 8).

Der ganze oben beschriebene Umschaltvorgang wird von der Synchronisationssteuerung 5 durchgeführt. Sie testet die Korrelationswerte in den drei Pfaden, bestimmt die notwendigen Verschiebungen der einzelnen PN-Code-Signale, setzt die Anfangsbedingung für das Ausgangssignal des Kreisfilters 8 und ändert die Zuordnung zwischen den über die Leitungen 4.1, 4.2, 4.3 zugeführten Korrelationssignalen und dem Ausgang 6.

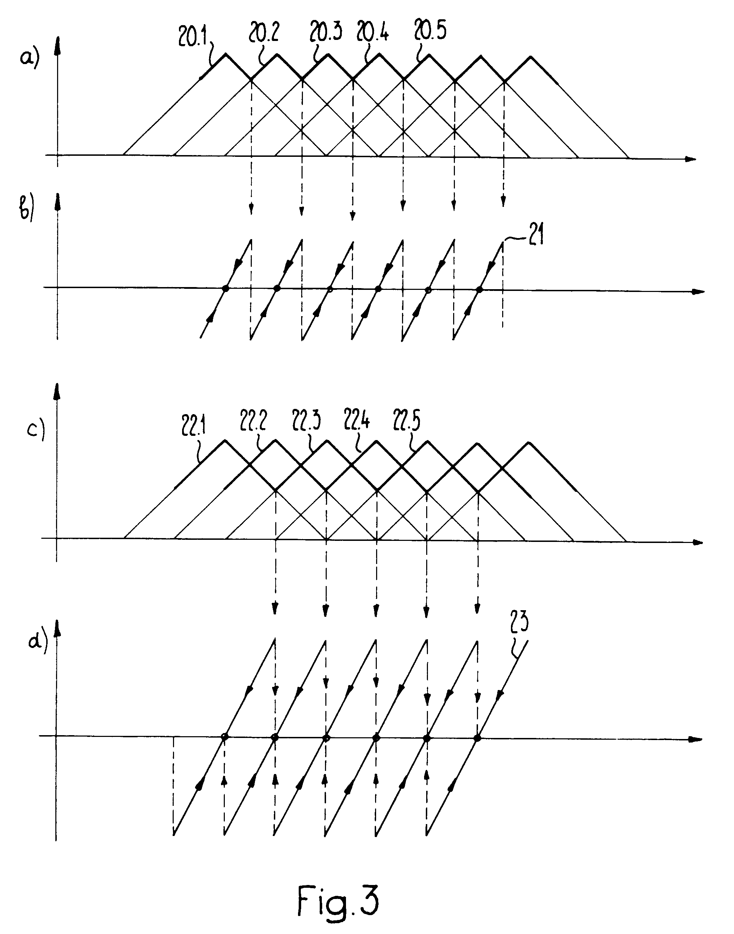

Das Prinzip der Erfindung wurde anhand des Falles delta = 1 erläutert. Mit Vorteil werden aber kleinere Werte für delta implementiert, z. B. delta = 0,5. In Fig. 3a-d sind zwei Beispiele für delta = 0,5 mit unterschiedlichen Umschaltkriterien dargestellt. Wie in Fig. 3 zu erkennen ist, sind die einzelnen Korrelationskurven 20.1, ..., 20.5 viel näher beabstandet als beim Beispiel gemäss Fig. 2a. Als Umschaltkriterium wurde wiederum die Bedingung gewählt, dass die Leistung (Wert der Korrelationskurve) im voreilenden bzw. nachlaufenden Pfad grösser als im mittleren ist. Die resultierende Diskriminatorkennlinie 21 unterscheidet sich von der in Fig. 2e gezeigten nur durch eine andere Periodizität. Im Vergleich zum obigen Beispiel ist jedoch die Leistung des zur Datendemodulation benutzten Signals immer ziemlich gross. Im Prinzip fällt sie nie mehr als um einen Viertel der maximalen Korrelationsleistung ab.

Besonders bevorzugt ist ein Umschaltkriterium, welches zu einer Hysterese der Diskriminatorkennlinie führt. Ein Beispiel für eine Umschaltung mit Hysterese ist aus den Fig. 3c und d zu entnehmen. In diesem Beispiel wird immer dann umgeschaltet, wenn die Leistung im voreilenden oder nachlaufenden Pfad zweimal so gross wie im mittleren ist. Aufgrund des geringeren Abstandes der Korrelationskurven 22.1, ..., 22.5 (im Vergleich zu Fig. 2) entsteht die bevorzugte, mittels Pfeilen angedeutete Hysterese in der Diskriminatorkennlinie 23. Es ist zu beachten, dass im Idealfall beim Umschalten der Phasenfehler verschwindet, da die neue "Ruhelage" mit dem "Grenzpunkt" der noch nicht umgeschalteten Kennlinie zusammenfällt.

Es leuchtet ein, dass bei delta = 0,5 jedes Umschaltkriterium, das stärker als das in Fig. 3a, b verwendete ist, zu einer Schalthysterese führt. Mit anderen Worten: Immer wenn gefordert ist, dass die Leistung im voreilenden oder nachlaufenden Pfad um einen bestimmten Wert grösser sein muss als die im mittleren Pfad, liegt eine Hysterese vor. Bedingung ist allerdings, dass delta < 1 gilt.

In den Fig. 2a-e und 3a-d wurden die Korrelationskurven für den Fall betragsbildender Enveloppendetektoren 3.1, 3.2, 3.3 dargestellt. Diese Kurvenformen ändern sich natürlich, wenn die Enveloppendetektoren z. B. die Amplitude quadrieren. Die Umschaltbedingungen sind dann entsprechend anzupassen.

Die Hysterese hat zur Folge, dass ein allzu schnelles mehrmaliges Hin- und Herschalten, das z. B. durch Störungen hervorgerufen werden kann, vermieden wird.

Hysteresen lassen sich mit den unterschiedlichsten Mitteln herbeiführen. So können z. B. auch mehr als drei Korrelationspfade vorgesehen werden, wobei ein Umschalten durch Ueberwachung der Signalleistung in den verschiedenen Korrelationspfaden und Durchschalten des Pfades maximaler Leistung zur Datendemodulation verbessert werden. Bei vier oder fünf parallelen Korrelationspfaden ist ja nicht nur ein mittlerer Pfad vorhanden und ein Umschalten resp. Verschieben des Regelbereiches kann länger hinausgeschoben werden, ohne dass die Leistung im Demodulationspfad allzu klein wird. Bei fünf Korrelationspfaden gibt es beispielsweise drei mittlere Pfade, die wahlweise nach dem Kriterium maximaler Leistung für die Datendemodulation herangezogen werden können. Solange das Empfangssignal nicht in den Bereich des frühesten resp. spätesten Korrelationssignals hineinläuft sind nämlich keine Phasenschiebungen erforderlich.

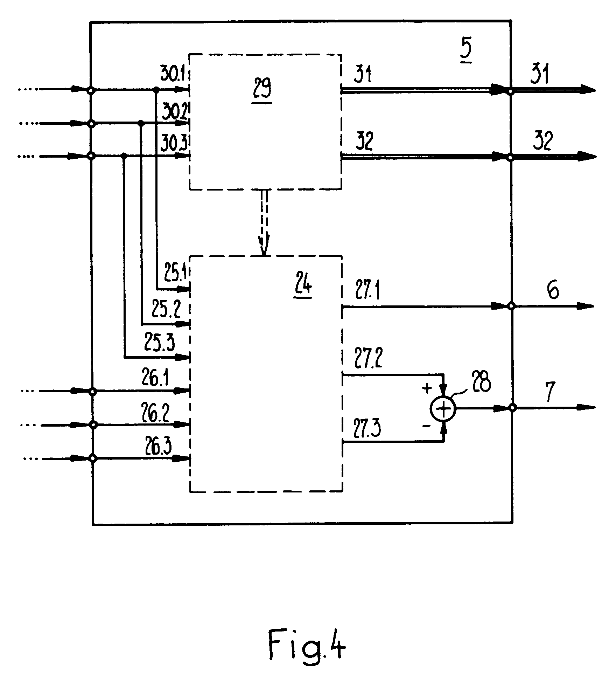

Fig. 4 zeigt ein Blockschaltbild der Synchronisationssteuerung 5. Eine Schaltmatrix 24 ist so ausgebildet, dass entsprechend von Steuersignalen der Umschaltsteuerung 29 wahlweise eines der an den Eingängen 26.1, 26.2, 26.3 anliegenden Daten enthaltenden Signale auf den Ausgang 27.1 zwecks Datendemodulation geschaltet werden kann. Die Enveloppen der Signale werden an Eingängen 30.1, 30.2, 30.3 der Umschaltsteuerung 29 zugeführt. Diese führt die anhand der Fig. 2a-e und 3a-d erläuterten Tests durch und ermittelt die Neuzuordnung der Korrelationspfade, die Anfangsbedingungen für das Kreisfilter 8 (Ausgang 32) und die Code-Position resp. Phasenlage für den PN-Code-Generator 10 (Ausgang 31).

Die Schaltmatrix 24 hat auch Eingänge 25.1, 25.2, 25.3 für die datenneutralen Ausgangssignale der Enveloppendetektoren 3.1, 3.2, 3.3 (vgl. Fig. 1). Zwei von diesen drei Eingängen werden entsprechend den Steuersignalen der Umschaltsteuerung 29 auf die Ausgänge 27.2 und 27.3 gegeben. Ein Subtrahierer 28 bildet die Differenz und gibt diese als Fehlersignal (Eingangssignal des Kreisfilters 8) aus.

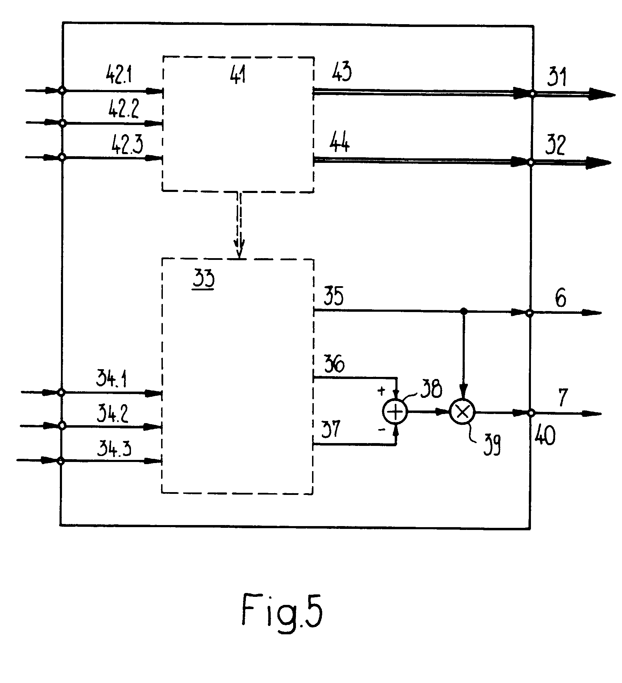

Fig. 5 zeigt schliesslich ein Blockschaltbild einer Synchronisationssteuerung für eine Synchronisation nach dem Prinzip des MCTL (Modified-Code-Tracking-Loop). An den Eingängen 34.1, 34.2, 34.3 einer Schaltmatrix 33 liegen die datentragenden Korrelationssignale (vgl. Leitungen 4.1, 4.2, 4.3 in Fig. 1) an. Die genannten Eingangssignale werden entsprechend den Signalen einer Umschaltsteuerung 41 wahlweise auf die Ausgänge 35, 36, 37 geführt. Der Ausgang 35 wird für die Datendemodulation verwendet. Die Ausgänge 36 und 37 werden in einem Subtrahierer 38 voneinander subtrahiert. Die resultierende Differenz wird in einem Multiplizierer 39 mit dem am Ausgang 35 abgegebenen Signal multipliziert. Daraus resultiert an einem Ausgang 40 das Fehlersignal, das über ein Kreisfilter an einen VCO gegeben wird.

An den Eingängen 42.1, 42.2, 42.3 der Umschaltsteuerung 41 liegen die Ausgangssignale der Enveloppendetektoren an. Auf der anderen Seite werden an Ausgängen 43 und 44 Code-Positionen (für den PN-Code-Generator) resp. Anfangsbedingungen (für das Kreisfilter) abgegeben.

Die Erfindung ist im übrigen auch auf weitere bekannte Regel-Strukturen anwendbar. Eine solche Struktur ist z. B. der an sich bekannte Tau-Dither-Loop. Aehnlich wie beim DLL wird beim Tau-Dither-Loop durch die Erfindung eine periodische Diskriminatorkennlinie erzeugt. Dasselbe gilt auch für den sogenannten Double-Dither-Loop.

Mit dem neuen PN-Code Tracking-Loop gemäss der Erfindung ist es somit möglich, mit drei gegeneinander verschobenen und adaptiv umschaltbaren Korrelationspfaden eine periodische Diskriminatorkennlinie zu erzeugen. Infolgedessen ist es möglich, schnelle dynamische Vorgänge mit einem schmalbandigen Regelkreis mit einem Kreisfilter niedriger Ordnung verfolgen zu können. Das erfindungsgemässe Schaltungskonzept kann auch für die Grobsynchronisation eingesetzt werden und führt zu einer wesentlichen Beschleunigung. Da alle drei Korrelationsarme identisch aufgebaut sind und eine Leistungsmessung in allen Armen möglich ist, kann eine Grobsynchronisation rund dreimal schneller durchgeführt werden als mit einer Synchronisationsschaltung, bei der nur ein Korrelationspfad für eine Leistungsmessung zur Verfügung steht.

### Bezugszeichenliste

- 1.1, 1.2, 1.3: Mischer
- 2.1, 2.2, 2.3: Bandpassfilter
- 3.1, 3.2, 3.3: Enveloppendetektor
- 4.1, 4.2, 4.3: Leitung
- 5: Synchronisationssteuerung
- 6: Ausgang
- 7: Ausgang
- 8: Kreisfilter
- 9: VCO
- 10: PN-Code-Generator
- 11.1, 11.2, 11.3: Ausgang
- 12: Lokaloszillator
- 13.1, 13.2, 13.3: Multiplizierer
- 14, 15, 16: Korrelationskurven
- 17, 17.1, 17.2: Kennlinie
- 18.1, 18.2: Regelbereich
- 19: Korrelationskurve
- 20.1, ..., 20.5: Korrelationskurve
- 21: Diskriminatorkennlinie
- 22.1, ..., 22.5: Korrelationskurve
- 23: Diskriminatorkennlinie
- 24: Schaltmatrix
- 25.1, 25.2, 25.3: Eingang
- 26.1, 26.2, 26.3: Eingang
- 27.1, 27.2, 27.3: Ausgang
- 28: Subtrahierer
- 29: Umschaltsteuerung
- 30.1, 30.2, 30.3: Eingang
- 31, 32: Ausgang
- 33: Schaltmatrix
- 34.1, 34.2, 34.3: Eingang
- 35, 36, 37: Ausgang
- 38: Subtrahierer
- 39: Multiplizierer
- 40: Ausgang
- 41: Umschaltsteuerung
- 42.1, 42.2, 42.3: Eingang
- 43, 44: Ausgang

## Patentansprüche

1. Verfahren zum Synchronisieren eines Empfängerschaltkreises auf ein Empfangssignal, welches ein mit einem PN-Code gespreiztes Datensignal beinhaltet, bei welchem auf der Basis eines regelbaren Zeitgebers mindestens drei zeitlich gegeneinander versetzte PN-Code-Signale erzeugt werden, wobei in einem ersten Korrelationspfad ein zeitlich mittleres PN-Code-Signal mit dem Empfangssignal zwecks Datendemodulation korreliert wird und in einem zweiten Korrelationspfad ein voreilendes und in einem dritten Korrelationspfad ein nachlaufendes PN-Code-Signal zwecks Regelung des Zeitgebers mit dem Empfangssignal korreliert werden, dadurch gekennzeichnet, dass bei einer zeitlichen Drift des Datensignals nach vorwärts resp. nach rückwärts ein durch das voreilende und das nachlaufende PN-Code-Signal definierter Regelbereich adaptiv verschoben wird, indem das nachlaufende resp. das voreilende PN-Code-Signal um ein vorgegebenes Zeitintervall an vorderste resp. an hinterste Stelle verschoben wird und unter Neuzuordnung der PN-Code-Signale eine Datendemodulation mit dem nunmehr mittleren PN-Code-Signal durchgeführt wird.

2. Verfahren nach Anspruch 1, dadurch gekennzeichnet, dass genau drei, um je deltaT_{c} versetzte PN-Code-Signale erzeugt werden und dass beim adaptiven Verschieben des Regelbereiches das voreilende resp. nachlaufende PN-Code-Signal um 3 deltaT_{c} an hinterste resp. vorderste Stelle verschoben wird.

3. Verfahren nach Anspruch 1 oder 2, dadurch gekennzeichnet, dass delta = 0,5 gewählt wird.

4. Verfahren nach Anspruch 1 oder 2, dadurch gekennzeichnet, dass delta = 1 gewählt wird.

5. Verfahren nach einem der Ansprüche 1 bis 4, dadurch gekennzeichnet, dass ein Verschieben des Regelbereiches immer dann erfolgt, wenn die Leistung im mittleren Korrelationspfad kleiner als in einem der äussersten Korrelationspfade ist.

6. Verfahren nach einem der Ansprüche 1 bis 4, dadurch gekennzeichnet, dass ein Verschieben des Regelbereiches immer dann erfolgt, wenn die Leistung des mittleren Korrelationspfades kleiner als die Hälfte derjenigen in einem der äussersten Korrelationspfade ist.

7. Synchronisationsschaltung umfassend
a) einen regelbaren Zeitgeber (9)
b) einen PN-Code-Generator (10) mit mindestens drei Ausgängen (11.1, 11.2, 11.3) zur Erzeugung von mindestens drei phasenmässig gegeneinander versetzten PN-Code-Signalen,
c) zu jedem Ausgang (11.1, 11.2, 11.3) des PN-Code-Generators (10) einen Korrelationspfad mit einem Mischer (1.1, 1.2, 1.3) zum Korrelieren des Empfangssignals (r(t)) mit je einem der PN-Code-Signale und eine Regelsignalschaltung zum Nachführen des Zeitgebers (9),
dadurch gekennzeichnet, dass
d) eine Schaltmatrix (24) vorgesehen ist, mit welcher wahlweise zwei adaptiv festlegbare Korrelationspfade an die Regelschaltung (8, 9) und einer an eine Demodulationsschaltung geleitet werden können, und dass der PN-Code-Generator (10) so ausgebildet ist, dass die Phasenlage jedes an den Ausgängen (11.1, 11.2, 11.3) abgegebenen PN-Code-Signals um vorgegebene Intervalle phasenmässig verschiebbar sind.

8. Empfänger für bandgespreizte Nachrichtensignale gekennzeichnet durch eine Synchronisationsschaltung nach Anspruch 7.

## Claims

1. Method of synchronising a receiver circuit with a received signal which includes a data signal expanded by a PN code, in which at least three PN-code signals, offset relative to one another in time, are produced on the basis of an adjustable timer, and in which a PN-code signal which is central in time is correlated with the received signal for data-modulation purposes in a first correlation path, and a leading PN-code signal and a trailing PN-code signal are correlated with the received signal in a second correlation path and in a third correlation path, respectively, for the purpose of adjusting the timer, characterized in that, upon a forward or a rearward drift of the data signal in time, a range of adjustment defined by the leading and the trailing PN-code signals is shifted adaptively by shifting of the trailing or the leading PN-code signal, respectively, by a predetermined time interval to the foremost or to the rearmost position, respectively, and by the execution of a data-modulation with the PN-code signal which is now central, with re-allocation of the PN-code signals.

2. Method according to Claim 1, characterized in that precisely three PN-code signals out of phase by deltaT_{c}, respectively, are produced, and in that, during the adaptive shifting of the range of adjustment, the leading or the trailing PN-code signal is shifted by 3 deltaT_{c} to the rearmost or to the foremost position, respectively.

3. Method according to Claim 1 or Claim 2, characterized in that delta = 0.5 is selected.

4. Method according to Claim 1 or Claim 2, characterized in that delta = 1 is selected.

5. Method according to any one of Claims 1 to 4, characterized in that a shift of the range of adjustment always takes place when the power in the central correlation path is less than in one of the outermost correlation paths.

6. Method according to any one of Claims 1 to 4, characterized in that a shift of the range of adjustment always takes place when the power of the central correlation path is less than half of that in one of the outermost correlation paths.

7. Synchronization circuit including
a) an adjustable timer (9)
b) a PN-code generator (10) with at least three outputs (11.1, 11.2, 11.3) for producing at least three PN-code signals out of phase with one another,
c) at each output (11.1, 11.2, 11.3) of the PN-code generator (10), a correlation path with a mixer (1.1, 1.2, 1.3) for correlating the received signal (r(t)) with a respective PN-code signal and a control-signal circuit for readjusting the timer (9),
characterized in that
d) a switching matrix (24) is provided, by means of which it is possible selectively to route two adaptively definable correlation paths to the control circuit (8, 9) and one to a demodulation circuit, and in that the PN-code generator (10) is formed in a manner such that the phase positions of the respective PN-code signals supplied at the outputs (11.1, 11.2, 11.3) can be phase-shifted by predetermined intervals.

8. Receiver for spread-spectrum message signals, characterized by a synchronization circuit according to Claim 7.

## Revendications

1. Procédé pour synchroniser un circuit de réception sur un signal de réception, qui contient un signal de donnée étalé avec un code PN, selon lequel au moins trois signaux de code PN réciproquement décalés dans le temps sont produits sur la base d'une minuterie réglable, un signal de code PN centré dans le temps est corrélé, dans une première voie de corrélation, au signal de réception pour la démodulation des données, et un signal de code PN en avance dans une seconde voie de corrélation et un signal de code PN en retard dans une troisième voie de corrélation sont corrélés au signal de réception pour réaliser la régulation de la minuterie, caractérisé en ce que dans le cas d'une dérive dans le temps du signal de donnée dans le sens de l'avance ou dans le sens rétrograde, une plage de régulation définie par le signal de code PN, qui est en avance, et par le signal de code PN, qui est en retard, est décalée de façon adaptative par le fait que le signal de code PN, qui est en retard, ou le signal de code PN, qui est en avance, est décalé d'un intervalle de temps prédéterminé en direction de la position la plus en avant ou de la position la plus en arrière et qu'une démodulation de données est exécutée avec le signal de code PN, qui est maintenant centré, moyennant une nouvelle association des signaux de code PN.

2. Procédé selon la revendication 1, caractérisé en ce que précisément trois signaux de code PN, qui sont décalés respectivement de deltaT_{c} sont produits et que dans le cas du déplacement adaptatif de la plage de régulation, le signal de code PN, qui est en avance, ou le signal de code PN, qui est en retard, est décalé de 3 deltaT_{c} pour être amené à l'emplacement le plus en arrière ou à l'emplacement le plus en avant.

3. Procédé selon la revendication 1 ou 2, caractérisé en ce qu'on choisit delta = 0,5.

4. Procédé selon la revendication 1 ou 2, caractérisé en ce qu'on choisit delta = 1.

5. Procédé selon l'une des revendications 1 à 4, caractérisé en ce qu'un décalage de la plage de réglage est exécuté chaque fois que la puissance dans la voie centrale de corrélation est plus faible que dans l'une des voies de corrélation les plus extérieures.

6. Procédé selon l'une des revendications 1 à 4, caractérisé en ce que le décalage de la plage de régulation est exécuté chaque fois que la puissance de la voie centrale de corrélation est inférieure à la moitié de la puissance dans l'une des voies de corrélation les plus extérieures.

7. Circuit de synchronisation comprenant
a) une minuterie réglable (9),
b) un générateur de code PN (10) comportant au moins trois sorties (11.1, 11.2, 11.3) servant à produit au moins trois signaux de code PN dont les phases sont réciproquement décalées,
c) pour chaque sortie (11.1, 11.2, 11.3) du générateur de code PN (10), une voie de corrélation comportant un mélangeur (1.1, 1.2, 1.3) pour corréler le signal de réception (r(t)) avec respectivement l'un des signaux de code PN, et un circuit de transmission de signaux de régulation pour l'asservissement de la minuterie (9).
caractérisé en ce que
d) il est prévu une matrice de commutation (24), avec laquelle au choix deux voies de corrélation pouvant être fixées de façon adaptative peuvent être raccordées au circuit de régulation (8, 9) et à un circuit de démodulation, et que le générateur de code PN (10) est agencé de telle sorte que les positions de phase des différents signaux de code PN, délivrés sur les sorties (11.1, 11.2, 11.3) sont décalées d'intervalles prédéterminés.

8. Récepteur pour des signaux d'information à bande étalée, caractérisé par un circuit de synchronisation selon la revendication 7.
